# EUROPÄISCHE PATENTSCHRIFT

(11) **EP 2 761 204 B1**
(45) Veröffentlichungstag und Bekanntmachung des Hinweises auf die Patenterteilung: **26.04.2017**
(21) Anmeldenummer: 12783856.3
(22) Anmeldetag: 25.09.2012
(51) Int. Cl.: F16H 1/22

(54) **ANTRIEB MIT GETRIEBE**
DRIVE WITH TRANSMISSION SYSTEM
ENTRAÎNEMENT AVEC MÉCANISME DE TRANSMISSION

(30) Priorität: 28.09.2011 DE 102011114464
(43) Veröffentlichungstag der Anmeldung: 06.08.2014
(73) Patentinhaber: Böttcher, Manfred, 24576 Weddelbrook (DE)
(72) Erfinder: Böttcher, Manfred, 24576 Weddelbrook (DE)
(74) Vertreter: Lobemeier, Martin Landolf
(86) Internationale Anmeldenummer: PCT/DE2012/000942
(87) Internationale Veröffentlichungsnummer: WO 2013/044900

(56) Entgegenhaltungen:
- WO-A1-00/65708
- CN-Y- 201 221 591
- DE-A1- 4 329 495
- GB-A- 2 429 342
- US-A- 1 459 964
- US-A- 5 463 914
- US-A1- 2010 303 626

## Beschreibung

Die Erfindung betrifft ein Getriebe.

Getriebe werden aufgrund der Notwendigkeit einer platzsparenden Bauweise häufig als Planetengetriebe ausgestaltet, wobei die Verwendung von Planetengetrieben in einer Vielzahl von Anwendungsfällen, beispielsweise bei Windenergieanlagen, Kraftfahrzeugen und in Walzwerken, bekannt ist. Dabei weisen die vorbekannten Planetengetriebe ein Hohlrad auf, das eine Innenverzahnung aufweist und auf dem innenliegend wenigstens zwei an einem Planetenträger befestigte, eine Außenverzahnung aufweisende Planetenräder kämmen und eine Übersetzung zum im Verhältnis zum Hohlrad koaxial angeordneten eine Außenverzahnung aufweisenden Sonnenrad schaffen.

Aus der US 5 463 914 ist ein Getriebe mit den Merkmalen des Oberbegriffs des Anspruchs 1 bekannt. Die CN 201 221 591 Y zeigt ein Getriebe mit nur außenverzahnten Zahnrädern, die in einem gleichseitigen Dreieck angeordnet sind.

Der Erfindung liegt die Aufgabe zugrunde, das vorbekannte Getriebe dahingehend weiter zu bilden, dass es eine andere Übersetzung bei geringem Bauvolumen ermöglicht.

Diese Aufgabe wird durch das Getriebe mit den Merkmalen von Anspruch 1 gelöst. Die Unteransprüche geben vorteilhafte Ausgestaltungen der Erfindung wieder.

Bei der Erfindung sind das Zahnrad der ersten Stufe, also das erste Zahnrad, und das Zahnrad der dritten Stufe, also das fünfte Zahnrad, konzentrisch angeordnet, wobei die mit den Zahnräder der ersten und dritten Stufe kämmenden Zahnräder, also die dritten und vierten Zahnräder, von der Achse der oben genannten Zahnräder der ersten und dritten Stufe gleich beabstandet sind und ein gleichschenkliges Dreieck bilden.

Die Achsen der dritten und vierten Zahnräder sind zu den Achsen der Ritzel der elektrischen Maschinen konzentrisch, die Achsen der dritten und vierten Zahnräder jeweils in der Winkelhalbierenden zwischen den Achsen der Ritzel angeordnet. Dabei sind die dritten und die koaxial mit den dritten Zahnrädern verbundenen vierten Zahnräder so angeordnet, dass die dritten Zahnräder mit dem zweiten Zahnrad und die vierten Zahnräder mit dem fünften Zahnrad im Eingriff sind.

Wird die Übersetzung der Stufen 2 und 3 unterhalb eines Verhältnisses von 5,40:1 gewählt, kann eine Anpassung der Gesamtübersetzung über die 1. Stufe, die achsstandsunabhängig eingestellt werden kann, erfolgen.

Werden die Zahnräder bevorzugt schrägverzahnt ausgebildet und werden das erste und zweite Zahnrad besonders bevorzugt in der Gehäusewandung einerseits und in einem im fünften Zahnrad angeordneten Lager andererseits gelagert, können auf das Getriebe sich ungünstig auswirkende Kräfte vermieden werden.

Insbesondere ist vorgesehen, dass die Zahnräder der ersten und dritten Stufe, also die Zahnradgruppen, die aus dem Ritzel der elektrischen Maschine und dem ersten Zahnrad, dem zweiten Zahnrad mit dem dritten Zahnrad und dem vierten mit dem fünften Zahnrad gebildet sind, eine derart gegenläufige Schrägverzahnung aufweisen, dass sich die aus der Schrägverzahnung der Zahnräder resultierenden Axialkräfte gegenseitig aufheben.

Dadurch kann das gesamte Getriebe in Bezug auf die Lagerung der Zahnräder und letztendlich auch das Getriebegehäuse geringer dimensioniert werden.

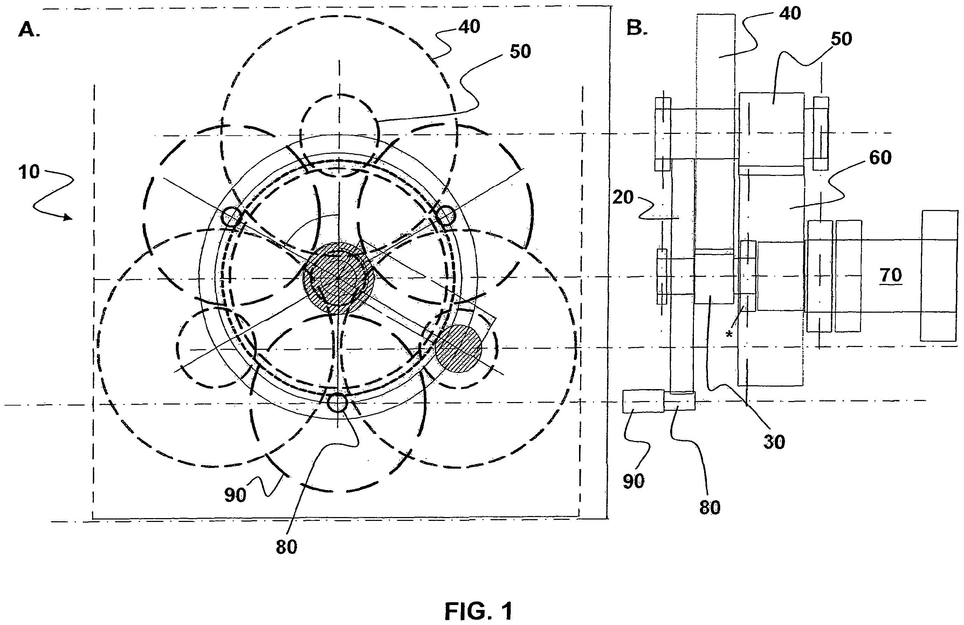

Die Erfindung wird anhand eines in der einzigen Fig. 1 dargestellten besonders bevorzugt ausgestalteten Ausführungsbeispiels näher erläutert, wobei Fig. 1A das Getriebe nach der Erfindung in Draufsicht und Fig. 1B das in Fig. 1A dargestellte Getriebe im Querschnitt zeigt.

Das Getriebe 10 weist ein zentral gelagertes erstes Zahnrad 20 auf, das mit einem hinter dem ersten Zahnrad 20 angeordneten zweiten Zahnrad fest verbunden ist, sodass das erste und das zweite Zahnrad 20, 30 im Betrieb mit derselben Umdrehungsgeschwindigkeit drehen. Das zweite Zahnrad 30 weist insbesondere einen geringeren Durchmesser als das erste Zahnrad 20 auf.

Das zweite Zahnrad 30 kämmt mit drei in einem gedachten gleichseitigen Dreieck angeordneten dritten Zahnrädern 40, die wiederum jeweils mit je einem im Verhältnis zu diesen kleineren vierten Zahnrad 50 fest verbunden sind, sodass die dritten und die vierten Zahnräder 40, 50 im Betrieb mit derselben Umdrehungsgeschwindigkeit drehen.

Schließlich findet eine weitere Übersetzung von den vierten Zahnrädern 50 auf ein mit dem ersten Zahnrad 20 koaxial angeordnetes fünftes Zahnrad 60 statt, das fest mit einer Welle 70 verbunden ist, wobei die Welle 70 als Antriebs- oder Abtriebswelle 70 eingerichtet sein kann.

Wird die Welle 70 beispielsweise als Antriebswelle 70 für eine Windenergieanlage verwendet - entspricht die Antriebswelle 70 also der Rotorwelle der Windenergieanlage oder ist mit dieser zumindest verbunden - erfolgt eine Übertragung der Rotationsbewegung der Antriebswelle 70 in der zur oben beschriebenen Reihenfolge entgegengesetzten Richtung auf das erste Zahnrad 20.

Dabei sind am ersten Zahnrad 20 erfindungsgemäß drei in Form eines gedachten gleichseitigen Dreieck angeordnete Ritzel 80 je einer als Generator 90 ausgebildeten elektrischen Maschine angeordnet, die jeweils zur Stromerzeugung genutzt werden können. Es erfolgt also grundsätzlich eine Kraftübertragung von der Antriebswelle 70 auf drei Abtriebswellen, nämlich die drei Antriebe der Generatoren 90.

Sind die elektrischen Maschinen 90 hingegen als Motoren 90 ausgebildet, werden die Motoren 90 zum Antrieb des ersten Zahnrads 20 und damit letztlich zum Antrieb der Abtriebswelle 70 verwendet. Hier erfolgt also grundsätzlich eine Kraftübertragung von drei Antriebswellen, nämlich drei Motoren 90, auf eine Abtriebswelle 70.

Die oben beschriebene grundsätzliche Kraftübertragung muss aber nicht bedeuten, dass zu jedem Zeitpunkt alle drei Generatoren oder Motoren gleichzeitig betrieben werden. Vielmehr ist bei den das Getriebe nach der Erfindung aufweisenden Maschinen bevorzugt eine Steuerung vorgesehen, die die Generatoren oder Motoren hinzu- oder abschalten kann.

So mag bei einer Windenergieanlage vorgesehen sein, dass je nach Windaufkommen ein, zwei oder drei Generatoren Strom ins Netz einspeisen. Andersherum können beispielsweise bei Maschinen, bei denen die Welle 70 als Abtrieb verwendet wird, zum Erreichen einer bestimmten Leistung der Maschine ein, zwei oder drei Motoren zum Antrieb verwendet werden.

Wenngleich drei elektrische Maschinen 80 und drei aus drittem und viertem Zahnrad 40, 50 gebildete Zahnradpaare aufgrund der Lastverteilung besonders vorteilhaft sind, sind weitere mit dem ersten Zahnrad 20 zusammenwirkende elektrische Maschinen und/oder weitere mit dem zweiten Zahnrad 30 kämmende Zahnradpaare denkbar.

Die Verzahnungen der Zahnräder 20, 30, 40, 50, 60 untereinander und/oder mit den Ritzeln 80 der elektrischen Maschinen 90 erfolgt bevorzugt als Stirnradverzahnung, wobei die Zahnräder 20, 30, 40, 50, 60 bzw. die Ritzel 80 besonders bevorzugt mit einer Schrägverzahnung ausgeführt sind.

Besonders vorteilhaft ist das gezeigte Ausführungsbeispiel im Hinblick auf die Lagerung der ersten Getriebestufe, also der Lagerung von erstem und zweitem Zahnrad 20, 30. Das erste und das mit diesem fest verbundene zweite Zahnrad 20, 30 sind auf deren einen Seite in einer (nicht dargestellten) Wandung des Getriebes und auf deren anderen Seite in einem im fünften Zahnrad 60 angeordneten (mit * gekennzeichneten) Lager gelagert. Die Lagerung des ersten und zweiten Zahnrads 20, 30 im fünften Zahnrad 60 erfolgt derart, dass sich erstes und zweites Zahnrad 20, 30 und das fünfte Zahnrad 60 bzw. die Antriebs- oder Abtriebswelle 70 unabhängig voneinander drehen können.

Vorteil dieser Ausgestaltung ist, dass Fluchtungsfehler in der Getriebeverzahnung oder ungleichmäßig auftretende Lasten aufgefangen werden können, sodass ohne allzu große Verschleißgefahr mit größeren Fertigungstoleranzen gearbeitet werden kann.

Bei einer weiter bevorzugt ausgestalteten Ausführungsform sind die drei ein gedachtes gleichseitiges Dreieck bildenden, mit der Außenverzahnung des ersten Zahnrads 20 kämmenden Ritzel 80 der elektrischen Maschinen 90 gegenüber den drei ein gedachtes gleichseitiges Dreieck bildenden mit dem zweiten Zahnrad 30 kämmenden dritten Zahnrädern 40 versetzt, insbesondere um 60° verdreht angeordnet. Derart ausgestaltet wird für einen ruhigen Gleichlauf des Getriebes gesorgt.

Das Getriebe nach der Erfindung kann in unterschiedlichen Maschinen verwendet werden. So ist beispielsweise ein Einsatz in Windenergieanlagen oder auch Werkzeugmaschinen denkbar.

## Patentansprüche

1. Getriebe (10) mit einer Getriebewandung, mit einer Mehrzahl von als Generator oder Motor ausgebildeten elektrischen Maschinen (90) und einer Mehrzahl von Zahnrädern, nämlich einem ersten Zahnrad (20), das zum Kämmen mit einer Mehrzahl von Ritzeln (80) der elektrischen Maschinen (90) vorgesehen ist, einem zweiten Zahnrad (30), das mit dem ersten Zahnrad (20) koaxial fest verbunden ist, mehreren dritten Zahnräder (40), die mit dem zweiten Zahnrad (30) kämmen, mehreren vierten Zahnrädern (50), die jeweils mit einem der dritten Zahnräder (40) koaxial fest verbunden sind, einem fünften Zahnrad (60), das mit den vierten Zahnrädern (50) kämmt und mit einer Antriebs- bzw. Abtriebswelle (70) verbunden ist, wobei das erste Zahnrad (20) und damit das zweite Zahnrad (30) und das fünfte Zahnrad (60) und damit die Antriebs- bzw. Abtriebswelle (70) koaxial angeordnet sind, **dadurch gekennzeichnet, dass** die Zahnräder (20, 30, 40, 50, 60) alle außenverzahnt sind und genau drei dritte Zahnräder (40) vorgesehen sind, die unter Bildung eines gedachten gleichseitigen Dreiecks kämmen.

2. Getriebe nach Anspruch 1, **dadurch gekennzeichnet, dass** drei elektrische Maschinen (90) vorgesehen sind, deren Ritzel (80) gegenüber den dritten Zahnrädern (40) um 60° versetzt angeordnet sind.

3. Getriebe nach Anspruch 1 oder 2, **dadurch gekennzeichnet, dass** die Zahnräder (20, 30) auf der Seite des ersten Zahnrads (20) in der Getriebewandung und auf der Seite des zweiten Zahnrads (30) in einem in dem fünften Zahnrad (60) angeordneten Lager (*) gelagert sind.

4. Getriebe nach einem der vorangehenden Ansprüche, **dadurch gekennzeichnet, dass** das Getriebe das einer Windenergieanlage ist.

## Claims

1. Gear (10) with a gear wall, with a plurality of electrical machines (90) designed as generator or motor and a plurality of sprockets, specifically
a first sprocket (20) intended for meshing with a plurality of pinions (80) of the electrical machines (90),
a second sprocket (30) that is coaxially firmly connected to the first sprocket (20),
several third sprockets (40) that mesh with the second sprocket (30),
several fourth sprockets (50), each of which is coaxially firmly connected to one of the third sprockets (40),
a fifth sprocket (60) that meshes with the fourth sprockets (50) and that is connected to a drive or output shaft (70), with the first sprocket (20) and thus the second sprocket (30) and the fifth sprocket (60), and thus the drive or output shaft (70), being placed coaxially,
**characterised in that**
the sprockets (20, 30, 40, 50, 60) all have outer teeth and
precisely three third sprockets (40) are provided that mesh while forming an imagined equilateral triangle.

2. Gear according to claim 1, **characterised in that** three electrical machines (90) are designed with pinions (80) arranged with an offset of 60° against the third sprockets (40).

3. Gear according to claim 1 or 2, **characterised in that** the sprockets (20, 30) on the side of the first sprocket (20) are supported in the gear wall and those on the side of the second sprocket (30) in a bearing (*) placed in the fifth sprocket (60).

4. Gear according to one of the preceding claims, **characterised in that** the gear is that of a wind turbine.

## Revendications

1. Engrenage (10) doté d'une paroi, avec une multitude de machines électriques (90) ayant la forme d'un générateur ou d'un moteur et d'une multitude de roues dentées,
à savoir
une première roue dentée (20) prévue pour peigner les machines électriques (90) à l'aide d'une multitude de pignons (80),
une deuxième roue dentée (30) fixée coaxialement à la première roue dentée (20),
plusieurs troisièmes roues dentées (40) peignant à l'aide de la deuxième roue dentée (30),
plusieurs quatrièmes roues dentées (50) respectivement fixées coaxialement avec
une des troisièmes roues dentées (40),
une cinquième roue dentée (60), peignant à l'aide des quatrièmes roues dentées (50) et reliée avec l'axe de transmission / du pignon (70), à savoir que la première roue dentée (20) et donc la deuxième roue dentée et la cinquième roue dentée (60) et donc l'axe de transmission / du pignon (70) sont placées coaxialement, **caractérisé en ce que**
les roues dentées (20, 30, 40, 50, 60) ont toutes un crantage extérieur et que précisément trois troisièmes roues dentées (40) sont prévues pour assurer le peignage en formant un triangle équilatéral pensé.

2. Engrenage selon la revendication 1, **caractérisé en ce que** trois machines électriques (90) sont prévues, dont les pignons (80) sont placés en décalé de 60° par rapport aux troisièmes roues dentées (40).

3. Engrenage selon la revendication 1 ou 2, **caractérisé en ce que** les roues dentées (20,30) sont placées sur le côté de la première roue dentée (20) dans la paroi de l'engrenage, et sur le côté de la deuxième roue dentée (30) dans un palier (*) placé dans la cinquième roue (60).

4. Engrenage selon une des revendications précédentes, **caractérisé en ce que** c'est celui d'une éolienne.
